# EUROPEAN PATENT SPECIFICATION

(11) **EP 2 886 400 B1**
(45) Date of publication and mention of the grant of the patent: **27.04.2016**
(21) Application number: 13197798.5
(22) Date of filing: 17.12.2013
(51) Int. Cl.: B60R 25/021

(54) **Antitheft steering column lock**
Diebstahlsicherung für eine Lenksäule
Dispositif de verrouillage de colonne de direction antivol

(43) Date of publication of application: 24.06.2015
(73) Proprietor: U-Shin Deutschland Zugangssysteme GmbH, DE-85253 Erdweg (DE)
(72) Inventor: Laval, Anthony, 85253 Erdweg (DE); Lehmeier, Norbert, 85253 Erdweg (DE)
(74) Representative: Huisman, Aurélien

(56) References cited:
- EP-A1- 2 130 726
- EP-A2- 0 957 015

## Description

The present invention concerns an antitheft steering column lock for an automotive vehicle. It concerns more precisely the blocking of a bolt in its locked position of the steering column and to prevent dismounting of the antitheft steering column lock when the bolt is in said locked position. Such a lock is known from EP 957015 A.

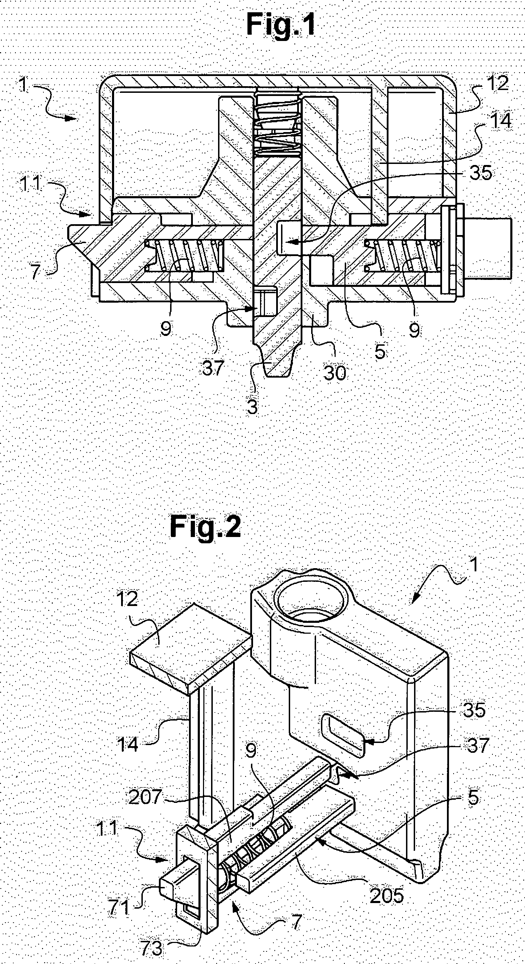

The antitheft steering column locks are designed to block the steering column when the vehicle is parked. As shown in figure 1, representing a sectional schematic view of a known antitheft steering column lock 1 configuration, a bolt 3 can slide in a support 30 between a released position, where the steering column can rotate, to a locked position, where the bolt 3 is inserted in a recess of the steering column and blocks its rotation.

To increase the theft protection, the antitheft steering column lock 1 could also comprise a Break Off Security System (BOSS) of the antitheft steering column lock 1. This BOSS of the antitheft steering column lock 1 comprises an insert member 5 capable of being released in response to a physical attack on the housing of the antitheft steering column lock 1 in order to be inserted in a first path 35 in the bolt 3 by an elastic mean 9, to prevent said bolt 3 from leaving its locked position. Thus, if a thief tries to break into the antitheft steering column lock 1, the bolt 3 will be blocked in its locked position.

The antitheft steering column lock 1 could also comprise an anti-dismounting system. Said anti-dismounting system comprises a pin 7 capable of being inserted in a second path 37 in the bolt 3, by another elastic mean 9, only when said bolt 3 is in its released position, in order to prevent a dismounting of the antitheft steering column lock 1 from the steering column when said steering column is locked.

However, the incorporation of these BOSS and anti-dismounting system on the antitheft steering column lock 1 is expansive and need a large antitheft steering column lock.

An object of the invention, among others, is thus to provide an improved antitheft steering column lock comprising a BOSS of the antitheft steering column lock and an anti-dismounting system of the steering column lock.

The present invention thus consists in the antitheft steering column lock of claim 1.

As the break off security system and the anti-dismounting system are placed on the same side of the bolt and are mechanically linked to each other, the space needed to integrate these two systems in the antitheft steering column lock is less important and it allows to provide a smaller, cheaper, because having less parts, antitheft steering column lock.

The use of a single elastic mean to push both of the insert member and the pin enables to place the break off security system and the anti-dismounting system on the same side of the bolt.

According to an aspect of the invention, the break off security system of the antitheft steering column lock and the anti-dismounting system are arranged for fitting together.

According to another aspect of the invention, the insert member is held in position by a first retaining mean and that the pin is held in position by a second retaining mean.

According to another aspect of the invention, the first retaining mean is an extension of the housing.

According to another aspect of the invention, the second retaining mean is a fixation plate attached to the structure of said antitheft steering column lock, holding the pin in opposition against the force of the elastic mean.

According to another aspect of the invention, the second retaining mean is a projection of the housing of the antitheft steering column lock, holding the pin in opposition against the force of the elastic mean.

According to another aspect of the invention, the antitheft steering column lock also comprises at least one guiding mean of the elastic mean.

According to another aspect of the invention, the insert member comprises at least one guiding mean.

According to another aspect of the invention, the insert member comprises at least two guiding means each one placed on an opposite side of the elastic mean.

According to another aspect of the invention, the pin comprises at least one guiding mean.

According to another aspect of the invention, the pin comprises at least two guiding means, each one placed on an opposite side of the elastic mean.

According to another aspect of the invention, the pin comprises a lateral extension capable of being engaged into the steering column.

The present invention also consists in an automotive vehicle, comprising an antitheft steering column lock as describe above.

The invention is explained in greater detail below with reference to the accompanying figures in which:
- the figure 1 represents a sectional schematic view of an antitheft steering column lock of the prior art,
- the figure 2 represents a partial schematic perspective view of an antitheft steering column lock according to the invention,
- the figure 3 represents a partial schematic perspective view with a different point of view of an antitheft steering column lock according to the invention, and
- the figure 4 represents a front view of an antitheft steering column lock according to the invention,
- the figure 5 represents a sectional schematic view of an antitheft steering column lock according to an embodiment of the invention.

In these figures, the same references refer to the same elements.

The figure 2 shows an antitheft steering column lock 1 for locking/unlocking a steering column. This antitheft steering column lock 1 comprises a bolt 3 movable between a locked position and a released position of the steering column (not represented). This bolt 3 and the mechanism, for example an electric mechanism, allowing its movements are covered by a housing 12 (partially shown) to protect them.

The antitheft steering column lock 1 comprises a break off security system (BOSS) of the antitheft steering column lock 1. The BOSS of the antitheft steering column lock 1 comprises an insert member 5 capable of being released in response to a physical attack on the housing of the antitheft steering column lock 1 in order to be inserted in a first path 35 in the bolt 3 to prevent said bolt 3 from leaving its locked position. The first path 35 is placed on the bolt 3 in order to be in front of the insert member 5 when said bolt 3 is in its locked position. The insert member 5 is held by a first retaining mean 14 linked to the housing 12.

So if a thief tries to remove the housing 12 in order to unlock the steering column, he will also remove the first retaining mean 14 and will release the insert member 5 which will move into the first path 35 and block the bolt 3 in its locked position.

The antitheft steering column lock 1 also comprises an anti-dismounting system. This anti-dismounting system comprises a pin 7 capable of being inserted in a second path 37 in the bolt 3 only when it is in its released position. The second path 37 is made in the bolt 3 on the same side as the first path 35. The second path 37 is also placed in the bolt 3 in order to be in front of the pin 7 when said bolt 3 is in its released position. The pin 7 comprises a lateral extension 71 capable of being engaged into the steering column (not represented) in order to prevent the removing of the antitheft steering column lock 1 from the steering column. If the bolt 3 is in locked position of the steering column a dismounting of the antitheft steering column lock 1 is not possible because it is blocked by lateral extension 71 which is engaged into the steering column and it is not possible to push the pin 7 due to the bolt 3 position.

If someone wants to remove the entire antitheft steering column lock 1, he has to push the pin 7 by pushing the lateral extension 71 in order to release said antitheft steering column lock 1 from the steering column. This pushing of the pin 7 is only possible if the bolt 3 is in its release position and the second path 37 is in front of the pin 7, otherwise the pin 7 is blocked by the bolt 3.

As shown in the figures 2 to 5, the break off security system of the antitheft steering column lock 1 and the anti-dismounting system are placed on the same side of the bolt 3. This two systems are mechanically linked to each other so that the insert member 5 of the BOSS and the pin 7 are linked to each other. This link between the insert member 5 and the pin 7 is ensured by an elastic mean 9, for example a spring, placed between the insert member 5 and the pin 7. This elastic mean 9 is in compression and push the insert member 5 in direction of the bolt 3 and push the pin 7 in the opposite direction of the bolt 3. The insert member 5 is held in position by the first retaining mean 14 and the pin 7 is blocked by a second retaining mean 11. The use of a single elastic mean to push both of the insert member and the pin enables to place the BOSS and the anti-dismounting system, on the same side of the bolt 3.

As the BOSS and the anti-dismounting system are placed on the same side of the bolt 3, the space needed to integrate these two systems in the antitheft steering column lock is less important and it allows to provide a smaller, cheaper, because having less parts, antitheft steering column lock.

Preferentially, the break off security system of the antitheft steering column lock 1 and the anti-dismounting system are arranged for fitting together so that the lock of the invention is very compact.

The first retaining mean 14 could be, for example, an extension of the housing 12 in contact with a lateral extension 51 of the insert member 5 in opposition against the force of the elastic mean 9.

The second retaining mean 11 could be the housing 12, as shown in figure 1, holding the pin 7 in position inside the structure 30.

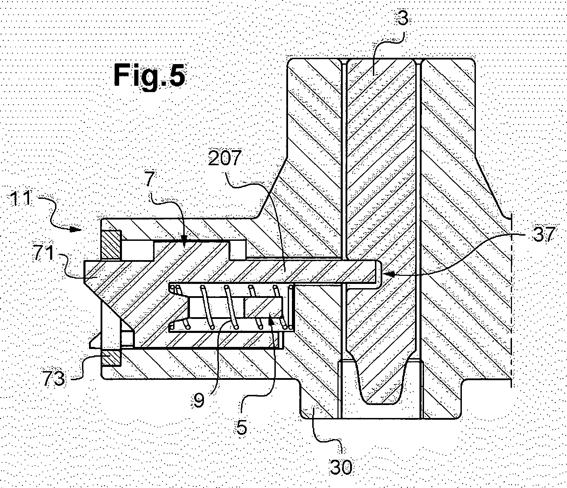

As shown on figures 5, the second retaining mean 11 could also be a fixation plate 73 attached to the structure 30 of the antitheft steering column lock 1, as shown on figures 2 to 5. The fixation plate 73 is attached directly to the structure 30 in order to make the fixation of the pin 7 independent of the housing 12. Indeed, if the housing 12 is removed, the pin 7 and the elastic mean 9 will still be in position because the fixation plate 73 is attached to the structure 30 and the elastic mean 9 could continue to apply a pressure to the insert member 5.

The antitheft steering column lock 1 also comprises at least one guiding mean 205, 207 of the elastic mean 9. These guiding means 205, 207 are held by the insert member 5 and/or the pin 7 and placed inside or on the sides of the elastic mean 9 in order to keep it straight.

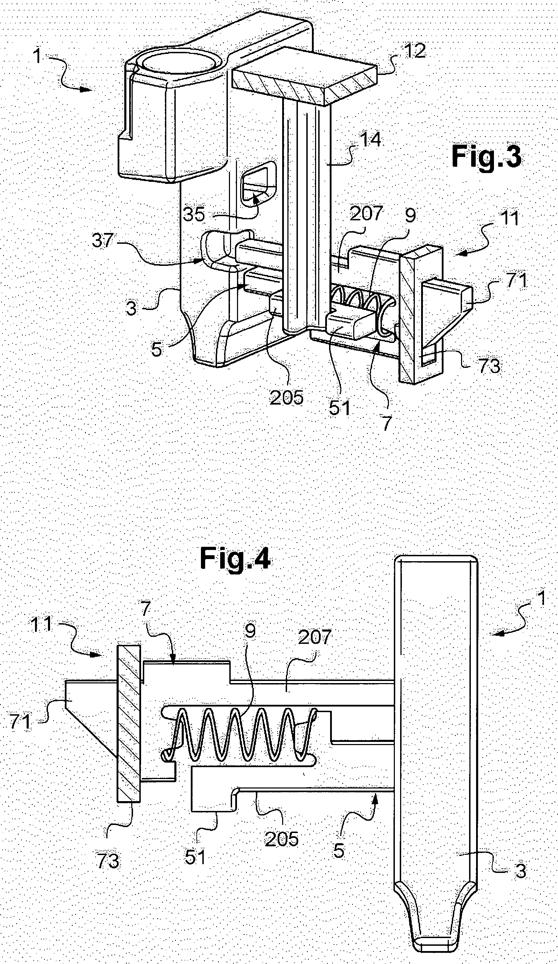

In a first embodiment, shown on figure 2 and 3, both of the insert member 5 and the pin 7 have at least two guiding means 205, 207. Each of the guiding means 205, 207 are held by a same element being placed on opposite sides of the elastic mean 9.

In a second embodiment, shown on figure 4, both of the insert member 5 and the pin 7 have a single guiding mean 205, 207. Each of the guiding means 205, 207 being placed on opposite sides of the elastic mean 9.

Of course it is also possible to have a single guiding mean 205 or 207 held by only one of the insert member 5 or the pin 7 and placed inside the elastic mean 5, for example if it is a spring. It's also possible to have a combination of guiding means 205, 207 placed inside the elastic mean 9 and on its sides.

In the different embodiments shown in figures 2 to 4, the first and second paths 35, 37 and the bolt 3 are in the same plane. But without getting out of the scope of the invention, it is also possible to have a different positioning of these paths as long as the first path 35 is in front of the insert member 5 when the bolt 3 is in its locked position and the second path 37 is in front of the pin 7 when the bolt 3 is in its released position.

Thus, the structural configuration of the break off security system and the anti-dismounting system enables to reduce the size, the number of parts and the cost of the antitheft steering column lock 1 of the invention without compromising the antitheft protection. Indeed, the two antitheft protection systems, the BOSS and the anti-dismounting system, are still in position and functional.

## Claims

1. Antitheft steering column lock (1) for locking/unlocking a steering column, said the antitheft steering column lock (1) comprising:
- a bolt (3) movable between a locked position and a released position of the steering column,
- a housing (12),
- a structure member (30),
- a break off security system of the the antitheft steering column lock (1) comprising an insert member (5) capable of being released in response to a physical attack on the housing (12) of the the antitheft steering column lock (1) in order to be inserted in a first path (35) in the bolt (3) to prevent said bolt (3) from leaving its locked position, and
- an anti-dismounting system comprising a pin (7) capable of being inserted in a second path (37) in the bolt (3) only when said bolt (3) is in its released position of the steering column,
wherein the break off security system of the the antitheft steering column lock (1) and the anti-dismounting system are placed on the same side of the bolt (3) and are mechanically linked to each other,
wherein an elastic mean (9) is placed between the insert member (5) and the pin (7), said elastic mean (9) being in compression and pushing the insert member (5) and the pin (7) in opposite directions, and
wherein the elastic mean (9) is a spring in compression between the insert member (5) and the pin (7).

2. Antitheft steering column lock (1) according to claim 1, wherein the break off security system of the the antitheft steering column lock (1) and the anti-dismounting system are arranged for fitting together.

3. Antitheft steering column lock (1) according any of claims 1 to 2, wherein the insert member (5) is held in position by a first retaining mean (14) and that the pin (7) is held in position by a second retaining mean (11).

4. Antitheft steering column lock (1) according to claim 3, wherein the first retaining mean (14) is an extension of the housing (12).

5. Antitheft steering column lock (1) according to any of claims 3 or 4, wherein the second retaining mean (11) is a fixation plate (73) attached to the structure (30) of said the antitheft steering column lock (1), holding the pin (7) in opposition against the force of the elastic mean (9).

6. Antitheft steering column lock (1) according to any of claims 3 or 4, wherein the second retaining mean (11) is the housing (12) of the the antitheft steering column lock (1), holding the pin (7) in opposition against the force of the elastic mean (9).

7. Antitheft steering column lock (1) according to any of claims 1 to 6, wherein said the antitheft steering column lock (1) also comprises at least one guiding mean (205, 207) of the elastic mean (9).

8. Antitheft steering column lock (1) according to claim 7, wherein the insert member (5) comprises at least one guiding mean (205).

9. Antitheft steering column lock (1) according to claim 8, **characterized in that** the insert member (5) comprises at least two guiding means (205) each one placed on an opposite side of the elastic mean (9).

10. Antitheft steering column lock (1) according to any of claims 7 to 9, wherein the pin (7) comprises at least one guiding mean (207).

11. Antitheft steering column lock (1) according to claim 10, wherein the pin (7) comprises at least two guiding means (207) each one placed on an opposite side of the elastic mean (9).

12. Antitheft steering column lock (1) according to any of claims 1 to 11, wherein the pin (7) comprises a lateral extension (71) capable of being engaged into the steering column.

13. Automotive vehicle comprising an antitheft steering column lock (1) according to any of claims 1 to 12.

## Patentansprüche

1. Diebstahllenksäulenschloss (1) zum Verriegeln/Entriegeln einer Lenksäule, wobei die Anti-Einbruchslenksäulenschloss (1), umfassend:
- der Bolzen (3) bewegbar ist zwischen einer verriegelten Position und einer gelösten Position der Lenksäule,
- ein Gehäuse (12),
- ein Strukturelement (30),
- ein Abbruchsicherheitssystem der Diebstahllenksäulenschloss (1) mit einem Einsatzteil (5), der in Reaktion auf einen körperlichen Anschlag auf dem Gehäuse (12) des Antidiebstahl-Lenksäulenschloss (1), um freigegeben zu werden, um in einem ersten Pfad (35) in den Bolzen eingeschoben werden (3) der Bolzen zu verhindern (3) aus seiner Verriegelungsstellung zu verlassen, und
- ein Anti-Abmontieren System mit einem Stift (7), der in einem zweiten Pfad eingeführt wird (37) in dem Bolzen (3) nur dann, wenn der Bolzen (3) in ihrer Freigabestellung der Lenksäule ist,
wobei das Sicherheitssystem des Diebstahllenksäulenverriegelung Bruch aus (1) und der anti-Abmontieren System auf der gleichen Seite der Schraube angeordnet sind, (3) und sind mechanisch miteinander verbunden sind,
wobei ein elastisches Mittel (9) zwischen dem Einsatzteil (5) und dem Stift (7), wobei das elastische Mittel (9) in Kompression und Drücken des Einsatzteils (5) und den Stift (7) in entgegengesetzter Richtung angeordnet ist.
wobei das elastische Mittel (9) eine Feder in Kompression zwischen dem Einsatzteil (5) und dem Stift (7).

2. Diebstahllenksäulenschloss (1) nach Anspruch 1, wobei der abbrechbare Sicherheitssystem der Diebstahllenksäulenschloss (1) und der anti- Abmontieren System zum Zusammensetzen angeordnet ist.

3. Diebstahllenksäulenschloss (1) nach einem der Ansprüche 1 bis 2, wobei das Einsatzteil (5) in Position durch einen ersten Halte Mittelwert gehalten wird (14) und daß der Stift (7) in Position durch einen zweiten gehaltenen Halte mean (11) aufweist.

4. Diebstahllenksäulenschloss (1) nach Anspruch 3, wobei das erste Halte mean (14) eine Verlängerung des Gehäuses (12).

5. Diebstahllenksäulenschloss (1) nach einem der Ansprüche 3 oder 4, wobei das zweite Halte mean (11) eine Befestigungsplatte (73) befestigt an der Struktur (30) des Antidiebstahl - Lenksäulenschloss (1), halten des Stifts (7) in Opposition gegen die Kraft der elastischen Mittel (9).

6. Diebstahllenksäulenschloss (1) nach einem der Ansprüche 3 oder 4, wobei das zweite Halte mean (11) das Gehäuse (12) der Anti-Einbruchslenksäulenschloss (1), das Halten der Stift (7) in Opposition gegen die Kraft der elastischen Mittel (9).

7. Diebstahllenksäulenschloss (1) nach einem der Ansprüche 1 bis 6, wobei die Anti-Einbruchslenksäulenschloss (1) auch mindestens eine Führungs mean (205, 207) des elastischen Mittel (9) aufweist.

8. Diebstahllenksäulenschloss (1) nach Anspruch 7, wobei das Einsatzteil (5) zumindest eine Führungsmittelwerts (205).

9. Diebstahllenksäulenschloss (1) nach Anspruch 8, **dadurch gekennzeichnet, daß** das Einsatzteil (5) mindestens zwei Führungsmittel (205), die jeweils eine auf einer entgegengesetzten Seite des elastischen Mittel (9) angeordnet.

10. Diebstahllenksäulenschloss (1) nach einem der Ansprüche 7 bis 9, wobei der Stift (7) zumindest eine Führungs mean (207).

11. Diebstahllenksäulenschloss(1) nach Anspruch 10, wobei der Stift (7), die jeweils eine auf einer entgegengesetzten Seite des elastischen Mittel angeordnet mindestens zwei Führungsmittel (207) (9) aufweist.

12. Diebstahllenksäulenschloss (1) nach einem der Ansprüche 1 bis 11, wobei der Stift (7) eine seitliche Verlängerung (71) aufweist ist, die in der Lenksäule eingreift.

13. Kraftfahrzeug mit einem Diebstahlschutzlenksäulenschloss (1) nach einem der Ansprüche 1 bis 12 umfasst.

## Revendications

1. Antivol verrouillage de la colonne de direction (1) pour le verrouillage/déverrouillage d'une colonne de direction, ledit verrou de colonne antivol de direction (1) comprenant:
- un boulon (3) pouvant se déplacer entre une position verrouillée et une position libérée de la colonne de direction,
- un boîtier (12),
- un élément de structure (30),
- un système de sécurité d'arrêt de la serrure de la colonne antivol de direction (1) comprenant un élément d'insertion (5) susceptible d'être libéré en réponse à une agression physique sur le boîtier (12) de la serrure de la colonne antivol de direction (1) afin d'être inséré dans un premier trajet (35) dans le boulon (3) pour empêcher ledit boulon (3) de quitter sa position verrouillée, et
- un système anti-démontage comprenant une broche (7) apte à être insérée dans un second trajet (37) dans le boulon (3) uniquement lorsque ledit axe (3) est dans sa position de libération de la colonne de direction,
dans lequel le système de sécurité de coupure du verrou de colonne de direction antivol (1) et le système anti-démontage sont placés sur le même côté du verrou (3) et sont reliés mécaniquement les uns aux autres,
dans lequel un moyen élastique (9) est placé entre l'élément d'insertion (5) et la broche (7), ledit moyen élastique (9) étant en compression et en poussant l'élément d'insertion (5) et la broche (7) dans le sens opposé.
dans lequel le moyen élastique (9) est un ressort en compression entre l'élément d'insertion (5) et la broche (7).

2. Antivol verrouillage de la colonne de direction (1) selon la revendication 1, dans lequel le système de sécurité de coupure du verrou de colonne de direction antivol (1) et le système anti- démontage sont agencés pour assembler.

3. Antivol verrouillage de la colonne de direction (1) selon l'une quelconque des revendications 1 à 2, dans lequel l'élément d'insertion (5) est maintenu en position par un premier moyen de retenue (14) et que la broche (7) est maintenue en position par un deuxième moyen de retenue (11).

4. Antivol verrouillage de la colonne de direction (1) selon la revendication 3, dans lequel le premier moyen de retenue (14) est une extension du boîtier (12).

5. Antivol verrouillage de la colonne de direction (1) selon l'une quelconque des revendications 3 ou 4, dans lequel le moyen deuxième de retenue (11) est une plaque de fixation (73) fixée à la structure (30) dudit verrou de colonne antivol de direction (1), tenant la broche (7) en opposition contre la force de la moyenne élastique (9).

6. Antivol verrouillage de la colonne de direction (1) selon l'une quelconque des revendications 3 ou 4, dans lequel le deuxième moyen de retenue (11) est le boîtier (12) de la serrure de la colonne antivol de direction (1), tenant la broche (7) contre la force du moyen élastique (9).

7. Antivol verrouillage de la colonne de direction (1) selon l'une quelconque des revendications 1 à 6, dans lequel ledit verrou de colonne antivol de direction (1) comprend également au moins un guidage de moyen (205, 207) du moyen élastique (9).

8. Antivol verrouillage de la colonne de direction (1) selon la revendication 7, dans lequel l'élément d'insertion (5) comprend au moins un moyen de guidage (205).

9. Antivol verrouillage de la colonne de direction (1) selon la revendication 8, **caractérisé en ce que** l'élément d'insertion (5) comprend au moins deux moyens de guidage (205), chacun placé sur un côté opposé du moyen élastique (9).

10. Antivol verrouillage de la colonne de direction (1) selon l'une quelconque des revendications 7 à 9, dans lequel la broche (7) comporte au moins un moyen de guidage (207).

11. Antivol verrouillage de la colonne de direction (1) selon la revendication 10, dans lequel la broche (7) comporte au moins deux moyens de guidage (207), chacun placé sur un côté opposé du moyen élastique (9).

12. Antivol verrouillage de la colonne de direction (1) selon l'une quelconque des revendications 1 à 11, dans lequel la broche (7) comprend une extension latérale (71) susceptible d'être engagée dans la colonne de direction.

13. Véhicule automobile comprenant un verrou de colonne de direction antivol (1) selon l'une quelconque des revendications 1 à 12.
